Europäisches Patentamt

European Patent Office

Office européen des brevets

(11) Publication number: **0 190 792**

**B1**

# EUROPEAN PATENT SPECIFICATION

(45) Date of publication of patent specification: **25.04.90**

(21) Application number: **86200124.5**

(22) Date of filing: **29.01.86**

(51) Int. Cl.⁵: **A 01 G 25/09**

(54) Irrigation system and sprinkler for such a system.

(30) Priority: **31.01.85 NL 8500273**

(43) Date of publication of application:
**13.08.86 Bulletin 86/33**

(45) Publication of the grant of the patent:
**25.04.90 Bulletin 90/17**

(84) Designated Contracting States:
**AT BE CH DE FR GB IT LI LU NL SE**

(56) References cited:
**EP-A-0 188 011**
**DE-B-1 236 851**
**DE-U-8 231 282**
**GB-A-1 522 037**
**NL-A-7 700 624**
**US-A-3 428 256**

**HANDOUT: "Landbouw RAI 1986 (Baars**
**beregeningstechniek)", 20th-26th January 1986,**
**Junior roll-up 8 swi-up sprinkler with protective**
**guard**

(73) Proprietor: **Veenhuis Machines B.V.**
**Almelosestraat 54**
**NL-8102 HB Raalte (NL)**

(72) Inventor: **Veenhuis, Eduard**
**28, Stationsstraat**
**Nl-8102 EC Raalte (NL)**

(74) Representative: **van der Veken, Johannes**
**Adriaan et al**
**EXTERPATENT B.V. P.O. Box 90649**
**NL-2509 LP 's-Gravenhage (NL)**

Courier Press, Leamington Spa, England.

## Description

The invention relates to an irrigation system, comprising a mobile reel onto which can be wound a hose, which can also be unrolled from it, said hose being provided at regular intervals with a sprinkler, comprising a short pipe part to be accommodated in the hose, a rotary sprinkler element which is mounted on the outer end of a pipe projecting with its inner end into the interior of the pipe part, and which is movable between an in-use position and an out-of-use position, and a base to place the sprinkler on the ground.

Such a system is known from GB—A—1 522 037 and is used to irrigate a broad strip of agricultural land which has a length equal to the total length of the unrolled hose.

In this known irrigation system each sprinkler has a branch pipe which projects into the interior of the tube part through a laterally projecting socket member of the tube part, and which is rotatable in the socket member about the axis of the latter. At its outer end, the branch pipe has an elbow which carries the sprinkler element. The branch pipe is axially movable in the socket member and the socket member has an upwardly and axially outwardly arched cam slot and the branch pipe is provided with a follower pin which projects into the slot in the socket member. In the out-of-use position the sprinkler element lies alongside and substantially parallel to the pipe part. If the branch pipe is pushed axially outwards under the influence of waterpressure in the pipe part, the pin and the slot cooperate to rotate the branch pipe and thus swing the sprinkler element to its upstanding in-use position.

The known irrigation system has disadvantages. In the out-of-use position the sprinkler element is not protected, so that particularly during winding or unwinding of the hose the sprinkler element can be damaged. Furthermore, due to the fact that the branch pipe with the sprinkler element projects laterally, there is a risk of tipping over of the sprinkler during winding or unwinding of the hose.

It is the object of the invention to provide a sprinkler system without the abovementioned disdavantages which enables the farmer to roll out the hose and rewind it without any problems.

This object is achieved according to the invention that the rotary sprinkler element is mounted at the outer end of a substantially straight pipe which is slideably disposed in the wall of the pipe part with its axis substantially perpendicular to the ground engaging plan of the base, and that a protective cage is provided round the sprinkler element, such that the sprinkler element extends above the protective cage in the in-use position and is enclosed by the protective cage in the out-of-use position.

In this irrigation system, due to the location of the sprinkler elements, the sprinklers are balanced so that there is no risk of tipping over of the sprinklers. Furthermore, in the out-of-use position each sprinkler element is protected by the cage, so that during winding of the hose onto the reel there can be no damage to the sprinkler element. After rolling out the hose onto the agricultural land (arable or grassland), when the water pressure is admitted, each sprinkler element will be pressed upwards due to the resistance to the outflow of water, and in this way will emerge above the protective cage. In this way irrigation can take place without the water jet(s) from the sprinkler element being impeded by the presence of the protective cage.

In order to give an idea, it can be pointed out that a common length of hose is 200 to 300 metres, with sprinklers being disposed at intervals of approx. 10 metres, so that an irrigation system often has 20 to 30 sprinklers in the hose.

DE—U—8 231 282 discloses a sprinkler with a protective brace protecting the sprinkler element, which serves as a protective cage. However, the sprinkler element is not movable between an in-use position and an out-of-use position. Furthermore the water jet from from the sprinkler element is impeded by the brace.

US—A—3 428 256 discloses a sprinkler with a vertically slideable sprinkler element which is movable between an in-use position and an out-of-use position in which the sprinkler element is received in a housing. However, this sprinkler is a stationary sprinkler, which does not show the problems which can occur in a mobile irrigation system during winding and unwinding of the hose.

In an advantageous embodiment of the invention the protection of each sprinkler is integral with the base, both being made of wire material and being designed jointly as a truncated pyramid. This shape gives great stability, even with forces occurring from the water pressure. A major advantage of the invention is also the fact that the sprinkler element is disposed centrally in the combined construction of protective cage and base, so that no eccentric forces are exerted by the sprinkler element on the whole sprinkler.

The invention is also embodied in a sprinkler for an irrigation system according to the invention.

The invention will be explained in greater detail with reference to the drawing, which shows an embodiment of both the system and a loose sprinkler.

Figure 1 is a perspective view of a partially unrolled system.

Figure 2 is a front view of a mobile reel with a hose wound onto it.

Figure 3 is a top view, on an enlarged scale, of an individual sprinkler of the system according to Figures 1 and 2.

Figure 4 is a cross section and partial view along the line IV—IV in Figure 3.

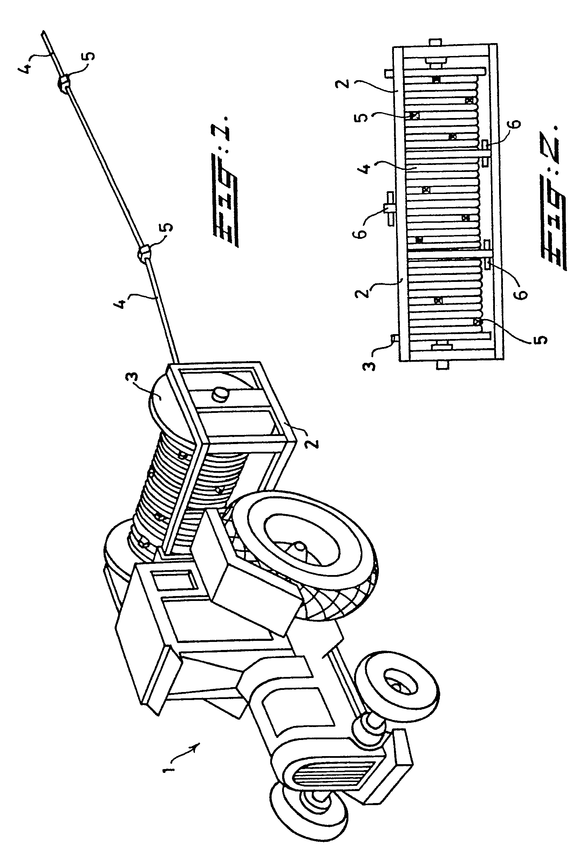

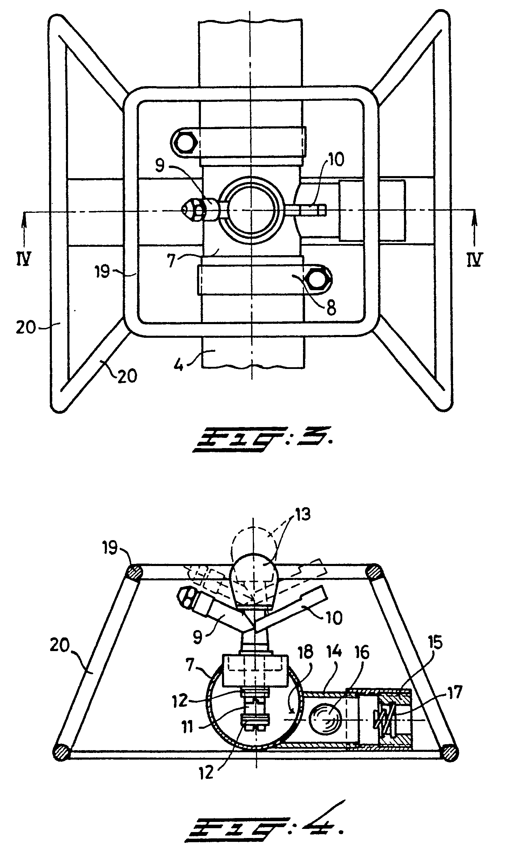

Figure 1 shows very schematically the irrigation system, combined with a tractor 1. The system comprises a mobile frame 2, which in this case is suspended behind the tractor 1. Accommodated in the frame 2 is a rotary reel 3 on which is wound a hose 4. This hose is provided at regular intervals with a sprinkler 5, which is shown in greater detail in Figures 3 and 4, which will be discussed below. Figure 1 shows the plant in a partially unrolled state, where a first part of the hose 4 is lying on the ground, and two sprinklers 5 are also resting on the ground. The frame 2 is provided with three suspension points 6 for connecting to the three-point suspension of the tractor 1. It is however, also possible to provide the frame 2 of the system with a number of supporting wheels. So far the system does not differ from the known state of the art.

The sprinkler illustrated in Figures 3 and 4 comprises a short pipe part 7 for connection to the hose 4 by means of a clamp S. The sprinkler is also provided with a rotary sprinkler element 9, which can be fitted with a conventional facility 10 for stepwise rotation. The sprinkler 9 is fitted on a pipe 11 which is slidable disposed in the wall of the pipe part 7. The pipe 11 has on its inside end a stop 12. At its top end, the pipe 11 has a rounded knob 13.

The pipe part 7 is also provided with a side branch pipe 14, provided with a seat 15 for a valve ball 16. Inside the seat 15 is a spring 17. The side branch pipe 14 is connected via a hole 18 with the inside of the pipe part 7. A protective cage 19 encloses the sprinkler element 9, 10, and is integral with a base 20. The elements 19 and 20 are both made of wire material and are together designed as a truncated pyramid.

As can be seen clearly from Figure 4, the sprinkler 5 has virtually no projecting parts, so long as no water pressure is admitted into the hose 4. The rounded knob 13 is the only projection, so that the hose 4 with the sprinklers 5 can easily be wound round the reel 3 and can be unrolled again without removing a projecting part of the sprinkler. When the hose 4 is extended and the water pressure is supplied, the pipe parts 7 will fill with this water under pressure, and the water comes via the hole 18 into the side branch pipe 14. The valve ball 16 is pushed along here and pressed against the seat 15, with the spring 17 present there being pressed in. In this way the water cannot escape from the side branch pipe 14, and the water flows into the pipe 11 in the direction of the sprinkler element 9. When the water comes out of this sprinkler element a build-up of pressure takes place inside the sprinkler 9 and the pipe 11, in such a way that the pipe 11 slides outwards until the stop 12 hits the wall of the pipe part 7, as shown by the dotted line in Figure 4.

In these circumstances each sprinkler 5 can function unhampered through the fact that the jet from the sprinkler element 9 passes along the top of the protective cage 19 and in not impeded by this cage. When the irrigation is complete and the water pressure is released, the spring 17 presses the ball valve 16 from its seat 15 and each sprinkler 5 can drain via the side branch pipe 14. During the sprinkler 5, all the water will be drained gradually from the hose 4, so that the hose 4 with the sprinklers 5 is wound empty onto the reel.

The slidable fitting of the sprinkler element 9, 10 on the pipe part 7 provides the following advantages:
—The sprinkler elment can retract on completion of the irrigation to a non-working position in which the sprinkler element is completely inside the protective cage 19.
—When water pressure is admitted into the hose 4 the sprinkler element of each sprinkler 5 will move automatically to the extended working position and in this way will function unhampered.
—Any personal intervention for detaching or fitting the sprinkler element, of the type required hitherto, is now unnecessary, so that the farmer can unroll and rewind the irrigation system without loss of time.
—The central position of the sprinkler element 9, 10 inside the combination of protective cage 19 and 20, in addition to the vertical sliding facility of the sprinkler element gives balanced operation of the plant without the risk of a sprinkler tipping over.

**Claims**

1. Irrigating system, comprising a mobile reel (3) onto which can be wound a hose (4), which can also be unrolled from it, said hose (4) being provided at regular intervals with a sprinkler (5), comprising a short pipe part (7) to be accommodated in the hose (4), a rotary sprinkler element (9, 10) which is mounted on the outer end of a pipe (11) projecting with its inner end into the interior of the pipe part (7), and which is movable between an in-use position and an out-of use position, and a base (20) to place the sprinkler (5) on the ground, characterized in that, the rotary sprinkler element (9, 10) is mounted at the outer end of a substantially straight pipe (11) which is slideably disposed in the wall of the pipe part (7) with its axis substantially perpendicular to the ground engaging plane of the base (20), and that a protective cage (19) is provided round the sprinkler element, such that the sprinkler element (9, 10) extends above the protective cage (19) in the in-use position and is enclosed by the protective cage (19) in the out-of-use position.

2. Irrigation system according to Claim 1, characterized in that the protective cage (19) is integral with the base (20).

3. Irrigation system according to Claim 2, characterized in that, the protective cage (19) and the base (20) are both made of wire material and are together designed as a truncated pyramid.

4. Sprinkler (5) for an irrigation system comprising the short pipe part (7) to be accommodated in a hose of an irrigation system, the rotary sprinkler element (9, 10), the base (20) and the protective cage (19), all these elements according to anyone of Claims 1 to 3.

## Patentansprüche

1. Bewässerungssystem, mit einer mobilen Rolle (3) auf die ein Schlauch (4) aufgewickelt werden kann, der auch davon abgewickelt werden kann, wobei der Schlauch (4) in regelmäßigen Abständen mit einem Sprenger (5) versehen ist, der ein kurzes Rohrteil (7) zu Anschluß an den Schlauch (4), ein Drehsprengelement (9, 10), das am äußeren Ende eines Rohres (11) montiert ist, das mit seinem inneren Ende in das Innere des Rohrteils (7) hineinsteht, und das zwischen einer Betriebsposition und einer Ruheposition bewegbar ist, und ein Basiselement (20), um den Sprenger (5) auf dem Boden zu plazieren, umfaßt, dadurch gekennzeichnet, daß das Drehsprengelement (9, 10) am äußeren Ende eines im wesentlichen geraden Rohres (11), das mit seiner Achse im wesentlichen senkrecht zu der den Boden berührenden Ebene des Basiselements (20) verschiebbar in der Wand des Rohrteils (7), angeordnet ist, montiert ist, und daß ein Schutzkäfig (19) um den Sprenger herum angeordnet ist, derart, daß das Sprengelement (9, 10) in der Betriebsposition sich oberhalb des Schutzkäfigs (19) erstreckt und in der Ruheposition von dem Schutzkäfig (19) eingeschlossen ist.

2. Bewässerungssystem nach Anspruch 1, dadurch gekennzeichnet, daß der Schutzkäfig (19) in das Basiselement (20) integriert ist.

3. Bewässerungssystem nach Anspruch 2, dadurch gekennzeichnet, daß der Schutzkäfig (19) und das Basiselement (20) beide aus einem Drahtmaterial hergestellt und zussammen als ein Pyramidenstumpf ausgebildet sind.

4. Sprenger (5) für ein Bewässerungssystem, das das kurze Rohrteil (7) zum Anschluß an den Schlauch des Bewässerungssystems, das Drehsprengelement (9, 10), das Basiselement (20) und den Schutzkäfig (19) umfaßt, wobei alle diese Elemente wenigstens einem der Ansprüche 1 bis 3 entsprechen.

## Revendications

1. Système d'irrigation, comprenant un enrouleur mobile (3) sur lequel peut être enroulé un tuyau (4) qui peut également en être déroulé, ce tuyau (4) étant équipé à intervalles réguliers d'unités d'arrosage (5), chaque unité d'arrosage comportant un manchon court (7) à monter dans le tuyau (4), un arroseur rotatif (9, 10) monté sur l'extrémité extérieure d'un tube (11) dont l'extrémité intérieure se projette dans l'intérieur du manchon (7) et qui peut se déplacer entre une position d'utilisation et une position de repos, et une base (20) pour placer l'unité d'arrosage (5) sur le sol, caractérisé en ce que l'arroseur rotatif (9, 10) est monté à l'extrémité extérieure d'un tube pratiquement rectiligne (11) qui est disposée, coulissant, dans la paroi du manchon (7) avec son axe pratiquement perpendiculaire au plan de coopération de la base (20) avec le sol et en ce qu'une cage de protection (19) est procurée autour de l'arroseur de telle sorte que l'arroseur (9, 10) dépasse au-dessus de la cage de protection (19) dans la position d'utilisation et est enfermé par cette cage de protection (19) dans la position de repos.

2. Système d'irrigation selon la revendication 1, caractérisé en ce que la cage de protection (19) est d'une seul tenant avec la base (20).

3. Système d'irrigation selon la revendication 2, caractérisé en ce que la cage de protection (19) et la base (20) sont toutes deux en fil métallique et sont conçus pour former ensemble un tronc de pyramide.

4. Unité d'arrosage (5) pour un système d'irrigation comprenant le manchon (7) à monter dans un tuyau d'un système d'irrigation, l'arroseur rotatif (9, 10), la base (20), la cage de protection (19), tous ces éléments se présentant selon l'une quelconque des revendications 1 à 3.

Fig:1.

Fig:2.

EP 0 190 792 B1

FIG:3.

FIG:4.

2